(19) **Europäisches Patentamt / European Patent Office / Office européen des brevets**

(11) **EP 2 212 832 B1**

(12) **EUROPEAN PATENT SPECIFICATION**

(45) Date of publication and mention
of the grant of the patent:
**09.01.2013 Bulletin 2013/02**

(21) Application number: **08849848.0**

(22) Date of filing: **12.11.2008**

(51) Int Cl.:
*G06K 19/077* (2006.01)    *H01Q 1/22* (2006.01)
*H01Q 9/26* (2006.01)

(86) International application number:
**PCT/IB2008/054734**

(87) International publication number:
**WO 2009/063409 (22.05.2009 Gazette 2009/21)**

(54) **A RADIO FREQUENCY TRANSPONDER AND RADIO FREQUENCY IDENTIFICATION SYSTEM**

HOCHFREQUENZTRANSPONDER UND HOCHFREQUENZIDENTIFIKATIONSSYSTEM

RÉPONDEUR HF ET SYSTÈME D'IDENTIFICATION HF

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **16.11.2007  EP 07120854**

(43) Date of publication of application:
**04.08.2010  Bulletin 2010/31**

(73) Proprietor: **NXP B.V.**
**5656 AG Eindhoven (NL)**

(72) Inventor: **HILGERS, Achim**
**A-1102 Vienna (AT)**

(74) Representative: **Krott, Michel**
**NXP B.V.**
**IP & Licensing Department**
**High Tech Campus 60**
**5656 AG Eindhoven (NL)**

(56) References cited:
**US-A1- 2005 146 423    US-A1- 2005 195 124**
**US-A1- 2007 115 188    US-B1- 6 285 342**

- **KESKILAMMI ET AL: "Using text as a meander line for RFID transponder antennas" IEEE ANTENNAS AND WIRELESS PROPAGATION LETTERS, IEEE, PISCATAWAY, NJ, US, vol. 3, no. 1, 1 December 2004 (2004-12-01), pages 372-374, XP011183066 ISSN: 1536-1225**

## Description

FIELD OF THE INVENTION

The invention relates to radio frequency transponders and to radio frequency identification systems.

BACKGROUND OF THE INVENTION

Radio frequency identification (RFID) is becoming a well established technology for identifying or tracking objects, materials and in future applications even animals or human beings in different branches of industry. RFID technology is considered a complement and likely an eventual replacement for bar code technology as RFID technology overcomes certain recognized bar code limitations. E.g. a visual line of sight between a reader and tagged RFID object is not necessary. Said technology is especially suited to transmit data ("information") via a wireless communication link, so any disturbing cables are needed. Transmission systems based on said RFID technology are referred to as Radio Frequency Identification (RFID) Systems.

Said RFID Systems are divided up in low-frequency and high frequency systems, whereas the low frequency systems have a transmission frequency below 800 MHz and are usually based on inductive coupling principles, which are used to operate at resonance according to connecting a suited capacitor to the coupling-coil. Said low frequency systems are suited for low ranges between a few centimetres up to about Im. Said high frequency systems are operating at frequencies higher than 800 MHz and are suited for data transmissions up to a few meters.

A RFID system comprises a RFID reader and a radio frequency transponder. Said radio frequency transponder is an electronic device which is used to identify said products, animals or humans. Basically, said radio frequency transponders can be divided in active and passive transponders, where said active transponders comprise an internal power source and said passive transponders are powered by the RF-field, produced by the RFID reader. In addition to that semi-active or semi-passive transponders are known, which are using their own energy source only on demand or in case of transmitting.

Said radio frequency transponder consist of a substrate and an integrated circuit disposed on said substrate, which saves information in form of data. Said integrated circuit may include a preferably hardwired microprocessor, which is usually programmable and can be rewritten by means of said RFID-reader. In addition to that, said radio frequency transponder consists of a radio frequency antenna being coupled to said integrated circuit. Said antenna has to be adapted to the integrated circuit and to the operating frequency band, which can be the UHF frequency band (Europe: 863 MHz to 868 MHz, US: 902 MHz to 928 MHz) or a higher ISM band such as e.g. 2.4 GHz. In addition, said RFID reader comprises at least one system antenna, which allows for data communication between said radio frequency transponder and the RFID reader itself.

Said integrated circuit is directly attached to the antenna by means of state-of-the-art techniques like wire-bonding, flip-chip, etc.. The antenna itself consists of a highly conducting material such as copper, aluminum, silver, gold, etc. and is attached onto said substrate, e.g. plastic foils, printed circuit boards, ceramic or ferrite materials or even composites of the aforementioned materials.

To optimize the radiating efficiency of said antenna the RF-reflection between antenna and integrated circuit has to be reduced. To achieve that, the complex power matching condition has to be fulfilled, thus maximum power can be transferred between the source ("antenna") and the load ("integrated circuit IC"). This condition is defined as follows:

$$\underline{Z}_{ic} = \underline{Z}^{*}_{antenna}$$

$$R_{ic} + j \cdot X_{ic} = R_{antenna} - j \cdot X_{antenna}$$

This means that for perfect matching the absolute values of the real- and imaginary parts of the load ("integrated circuit, ic") and source ("antenna") have to be equal and the imaginary parts have to be conjugated to each other. Usually the impedance of the integrated circuit tends to have a capacitive behavior, i.e. the imaginary part ("$X_{ic}$") of the integrated circuit is negative. That means for an efficient transponder design an antenna with an inductive tendency is needed, i.e. the imaginary part ("$X_{antenna}$") of the antenna impedance should be positive and its absolute value should be equal to the imaginary part of the impedance of the integrated circuit. In this case and if additionally the real parts ("$R_{ic}$, $R_{antenna}$") of the integrated circuit impedance and the antenna impedance are equal, "conjugate power matching" is realized, and a maximum of energy can be transferred between antenna and the integrated circuit. From an antenna-design point of view this also means, that the real- and the imaginary part of the complex antenna impedance has to be matched to the corresponding real- and imaginary part of the impedance of the integrated circuit. In addition, the radiation efficiency of the antenna has to be maximized.

Conventional transponder-designs usually have a dipole-like radiation performance, which is characterized by an omni-directional radiating pattern in a single polarization plane. Thus the dipole-like antenna has to be oriented in such a manner, that the RFID reader can make use of this omni-directional pattern. In contrast to that, the proposed transponder-design can be used independently on the chosen position and orientation in relation to the antenna of the RFID reader.

International patent application no. WO 2005/119587 A1 discloses a radio frequency identification tag attached to an object and comprising an antenna and an integrated circuit for providing object information to a separate reader. The antenna further comprises a pair of meanderline transmission lines each terminated at a first end for conductive connection to the integrated circuit. In addition to that, a shorting bar connected between said pair of meanderline transmission lines at the first end is operative to match the antenna impedance with the integrated circuit impedance in order to bypass the conductive connection to the integrated circuit.

Furthermore, International Patent Application No. WO-2007/047277 A2 discloses an RFID tag system comprising a reader having a transmit antenna and operable to transmit a signal to an RFID tag and an RFID tag including a circularly polarized antenna. Said tag antenna includes two crossed dipoles exhibiting an omnidirectional characteristic. Said dipoles are fed with signals having a relative phase angle of 90° provided by signal source coupled to a power splitter and a delay line for one output of the power splitter.

Furthermore, US 2005/195124 A1 discloses an antenna comprising at least two radiating structures, said radiating structures taking the form of two arms, said arms being made of or limited by a conductor, superconductor or semiconductor material, said two arms being coupled to each other through a region on first and second superconducting arms such that the combined structure of the coupled two-arms forms a small antenna with a broadband behavior, a multiband behavior or a combination of both effects. The coupling between the two radiating arms is obtained by means of the shape and spatial arrangement of said two arms, in which at least one portion on each arm is placed in close proximity to each other (for instance, at a distance smaller than a tenth of the longest free-space operating wavelength) to allow electromagnetic fields in one arm being transferred to the other through said specific close proximity regions. Said proximity regions are located at a distance from the feeding port of the antenna (for instance a distance larger than 1/40 of the free-space longest operating wavelength) and specifically exclude said feeding port of the antenna.

Furthermore, the article "Using Text as a Meander Line for RFID Transponder Antennas", published in IEEE ANTENNAS AND WIRELESS PROPAGATION LETTERS, VOL. 3, 2004, pages 372-374, ISSN: 1536-1225, discloses an approach of using text as a meander line for size reduction of dipole antennas used in passive transponders for radio frequency identification (RFID) system is proposed. Three different structures of text dipole antennas for 869 MHz RFID applications have been examined numerically using a finite element method simulator. The impedance matching and the radiation properties of the fabricated antennas are measured and the results are compared with the simulated values.

OBJECT AND SUMMARY OF THE INVENTION

It is an object of the invention to provide a radio frequency transponder having a technical simple antenna structure providing a quasi-omnidirectional characteristic.

In order to achieve the object defined above, a radio frequency transponder according to claim 1 is provided, the antenna comprising a first conducting arm having a substantially U-shaped structure and a second conducting arm having an at least partly meander-shaped structure. Advantageously, said radio frequency transponder supports an excellent receiving behaviour, namely independent from the orientation and placement of the antenna of said RFID transponder. This unique feature is based on the "quasi"-omnidirectional radiation performance of the proposed antenna design.

Advantageously, said antenna comprises an asymmetrical antenna structure and is linear polarized.

Further advantageously, said method enables a higher integration capability by reducing the number of components, power and costs.

The integrated circuit is capable of providing information to a separate RFID reader via a wireless communication link and is connected to first ends of said first and second conducting arms.

These and other aspects of the invention are apparent from and will be elucidated with reference to the embodiments described hereinafter.

BRIEF DESCRIPTION OF THE DRAWINGS

The invention will be described in greater detail hereinafter, by way of nonlimiting examples, with reference to the embodiments shown in the drawings.

Fig. 1 shows a block diagram of an RFID transponder having a specific antenna design;
Fig. 2a-2c show three polar diagrames of the radiation pattern of the antenna design of Fig. 1.

DESCRIPTION OF EMBODIMENTS

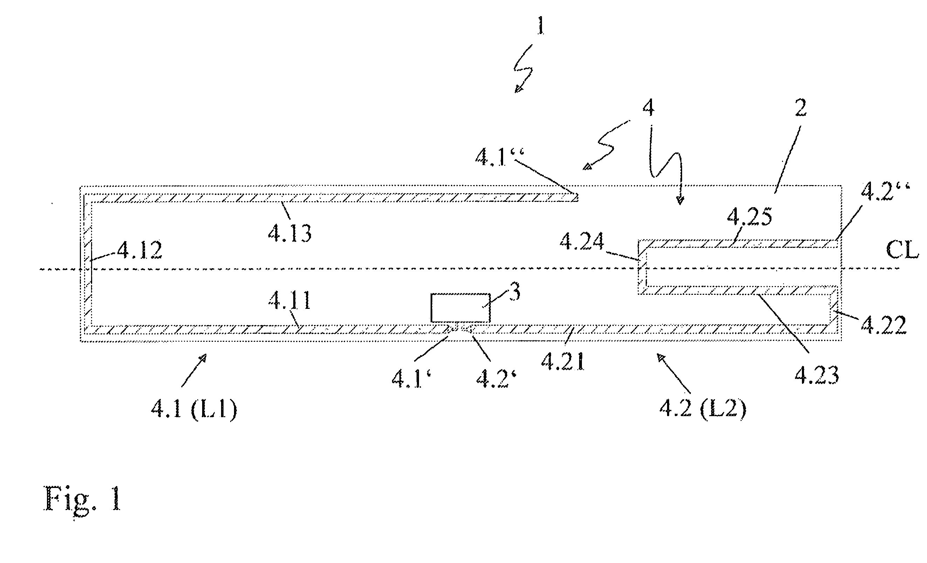

Fig. 1 shows per way of example a block diagram of a radio frequency identification (RFID) transponder 1 comprising a substrate 2 and an integrated circuit 3 disposed on said substrate 2, wherein said integrated circuit 3 is capable of providing information to a separate RFID reader via a wireless communication link (not shown in Fig. 1).

In addition to that an antenna 4 is disposed on said substrate 2. Said antenna 4 comprises a first conducting arm 4.1 and a second conducting arm 4.2, wherein said first conducting arm 4.1 comprises a first end 4.1' connected to the integrated circuit 3 and said second conducting arm 4.2 comprises a first end 4.2' also connected to the integrated circuit 3.

Instead of using two straight conducting arms as for the ordinary dipole, according to the invention an asymmetrical antenna structure is used comprising a first and second conducting arm 4.1, 4.2 at least twice bended. In order to match the imaginary part of the integrated circuit impedance the first arm 4.1 has a substantially U-shaped structure and the second arm 4.2 has an at least partly meander-shaped structure. In addition, said first and second arms 4.1, 4.2 comprise second ends 4,1", 4.2" which are oriented in the same direction.

The first conducting arm 4.1 has a total first electrical length L1 and the second conducting arm 4.2 has a total second electrical length L2, where the total first and second electrical lengths L 1, L2 are different.

The first conducting arm 4.1 comprises a first, second and third conducting leg 4.11, 4.12, 4.13, wherein the first and third conducting legs 4.11, 4.13 are oriented in parallel to the center line CL of the substrate 2 and the second conducting leg 4.12 is oriented vertically to the center line CL of the substrate 2.

The second conducting arm 4.2 comprises a first, second, third, fourth and fifth conducting leg 4.21, 4.22, 4.23, 4.24, 4.25, wherein the first, third and fifth conducting legs 4.21, 4.23, 4.25 are oriented in parallel and the second and fourth conducting legs 4.22, 4.24 are oriented vertically to the center line CL of the substrate 2.

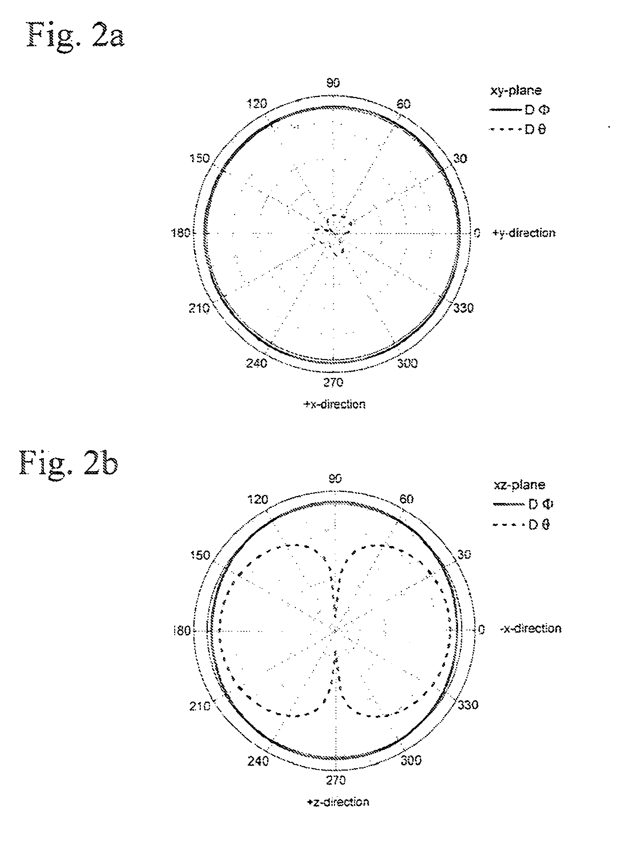

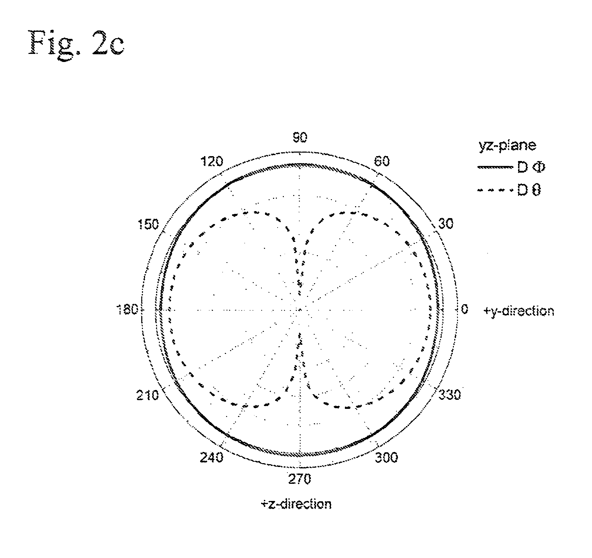

In Figure 2a-2c three polar diagrams are depicted showing the radiation performance of the antenna 4 in the three main planes ("xy-, xz- and yz-plane"). By way of example an operating frequency of 865 MHz has been chosen. In the polar diagrams the two linear polarizations Φ (phi, "solid line") and Θ (theta, "dashed line") are considered. The polar diagrams show that the presented antenna design shows a fairly good omni-directional radiation performance in all three main planes ("xy-, xz- and yz-plane"). Therefore, the RFID transponder 1 shows no dependency on the alignment of the antenna 4 in relation to a RFID system/reader antenna. So the presented capacitive couplings between the first and second conducting arms 4.1, 4.2 in combination with their self-inductance enables a fairly good match of the given integrated circuit impedance. No more coupling structures are needed as for an ordinary dipole based antenna.

Finally, it should be noted that the above-mentioned embodiments illustrate rather than limit the invention, and that those skilled in the art will be capable of designing many alternative embodiments without departing from the scope of the invention as defined by the appended claims. In the claims, any reference signs placed in parentheses shall not be construed as limiting the claims. The word "comprising" and "comprises", and the like, does not exclude the presence of elements or steps other than those listed in any claim or the specification as a whole. The singular reference of an element does not exclude the plural reference of such elements and vice-versa. In a device claim enumerating several means, several of these means may be embodied by one and the same item of software or hardware. The mere fact that certain measures are recited in mutually different dependent claims does not indicate that a combination of these measures cannot be used to advantage.

**Claims**

1. A radio frequency transponder (1) comprising:

   a substrate (2);
   an integrated circuit (3) disposed on said substrate (2); and
   an antenna (4) disposed on said substrate (2) and coupled to the integrated circuit (3); the antenna (4) comprising:

   a first conducting arm (4.1) having a substantially U-shaped structure and a second conducting arm (4.2) having an at least partly meander-shaped structure,
   wherein the first conducting arm (4.1) comprises a first, second and third conducting leg (4.11, 4.12, 4.13) and wherein the first and third conducting legs (4.11, 4.13) of the first conducting arm (4.1) are oriented in parallel and the second conducting leg (4.12) of the first conducting arm (4.1) is oriented vertically to a center line (CL) of the substrate (2),
   wherein the second conducting arm (4.2) comprises a first, second, third, fourth and fifth conducting leg (4.21, 4.22, 4.23, 4.24, 4.25),
   wherein the first, third and fifth conducting legs (4.21, 4.23, 4.25) of the second conducting arm (4.2) are oriented in parallel and the second and fourth conducting legs (4.22, 4.24) of the second conducting arm (4.2) are oriented vertically to the center line (CL) of the substrate (2),
   **characterised in that** said first and second conducting arms (4.1, 4.2) comprise second ends (4.1", 4.2") pointing in the same direction.

2. A radio frequency transponder (1) according to claim 1, wherein said antenna (4) comprises an asymmetrical antenna structure.

3. A radio frequency transponder (1) according to claim 1 or 2, wherein said antenna (4) is linear polarized.

4. A radio frequency transponder (1) according to one of the claims 1 to 3, wherein said integrated circuit (3) is providing information to a separate RFID reader via a wireless communication link.

**5.** A radio frequency transponder (1) according to one of the claims 1 to 4, wherein said first and second conducting arms (4.1, 4.2) comprise first ends (4.1', 4.2') being connected to the integrated circuit (3).

**6.** A radio frequency transponder (1) according to one of the claims 1 to 5, wherein the first conducting arm (4.1) comprises a total first electrical length (L1) and the second conducting arm (4.2) comprises a total second electrical length (L2), wherein the total first and second electrical lengths (L1, L2) are of different length.

**7.** A radio frequency transponder (1) according to one of the claims 1 to 6, wherein said operation frequency of said radio frequency transponder (1) is above roughly 800 MHz.

**8.** A radio frequency identification (RFID) system, comprising a radio frequency identification reader device having a transmit antenna and operable to transmit a radio frequency signal to a radio frequency transponder (1) and a radio frequency transponder (1) according to one of the claims 1 to 7.


**Patentansprüche**

**1.** Hochfrequenz-Transponder (1), welcher aufweist:

ein Substrat (2);
einen integrierten Schaltkreis (3), welcher auf dem Substrat (2) angeordnet ist; und
eine Antenne (4), welche auf dem Substrat (2) angeordnet ist und an den integrierten Schaltkreis (3) gekoppelt ist; wobei die Antenne (4) aufweist:

einen ersten leitenden Arm (4.1), welcher eine im Wesentlichen U-förmige Struktur hat und einen zweiten leitenden Arm (4.2), welcher eine zumindest teilweise meanderförmige Struktur hat,
wobei der erste leitende Arm (4.1) einen ersten, zweiten und dritten leitenden Abschnitt (4.11, 4.12, 4.13) aufweist und wobei die ersten und dritten leitenden Abschnitte (4.11, 4.13) des ersten leitenden Arms (4.1) parallel orientiert sind und der zweite leitende Abschnitt (4.12) des ersten leitenden Arms (4.1) vertikal zu einer Mittellinie (CL) des Substrates (2) orientiert ist,
wobei der zweite leitende Arm (4.2) einen ersten, zweiten, dritten, vierten und fünften leitenden Abschnitt (4.21, 4.22, 4.23, 4.24, 4.25) aufweist, wobei die ersten, dritten und fünften leitenden Abschnitte (4.21, 4.23, 4.25) des zweiten leitenden Arms (4.2) parallel orientiert sind und die zweiten und vierten Abschnitte (4.22, 4.24) des zweiten leitenden Arms (4.2) vertikal zu der Mittellinie (CL) des Substrates (2) orientiert sind,

**dadurch gekennzeichnet, dass** die ersten und zweiten leitenden Arme (4.1, 4.2) zweite Enden (4.1", 4.2") aufweisen, welche in die gleiche Richtung zeigen.

**2.** Hochfrequenz-Transponder (1) gemäß Anspruch 1, wobei die Antenne (4) eine asymmetrische Antennenstruktur aufweist.

**3.** Hochfrequenz-Transponder (1) gemäß Anspruch 1 oder 2, wobei die Antenne (4) linear polarisiert ist.

**4.** Hochfrequenz-Transponder (1) gemäß einem der Ansprüche 1 bis 3, wobei der integrierte Schaltkreis (3) über einen drahtlosen Kommunikationslink Informationen an einen separaten RFID Leser bereitstellt.

**5.** Hochfrequenz-Transponder (1) gemäß einem der Ansprüche 1 bis 4, wobei die ersten und zweiten leitenden Arme (4.1, 4.2) erste mit dem integrierten Schaltkreis (3) verbundene Enden (4.1', 4.2') aufweisen.

**6.** Hochfrequenz-Transponder (1) gemäß einem der Ansprüche 1 bis 5, wobei der erste leitende Arm (4.1) eine gesamte erste elektrische Länge (L1) aufweist und der zweite leitende Arm (4.2) eine gesamte zweite elektrische Länge (L2) aufweist, wobei die gesamten ersten und zweiten elektrischen Längen (L1, L2) von unterschiedlicher Länge sind.

**7.** Hochfrequenz-Transponder (1) gemäß einem der Ansprüche 1 bis 6, wobei die Arbeitsfrequenz des Hochfrequenz-Transponders (1) über etwa 800 MHz ist.

**8.** Hochfrequenz-Identifikation (RFID) System, welches aufweist
eine Hochfrequenz-Identifikationslesevorrichtung, welche eine Übertragungsantenne hat und betreibbar ist, ein Hochfrequenz-Signal an einen Hochfrequenz-Transponder (1) zu übertragen, und
einen Hochfrequenz-Transponder (1) gemäß einem der Ansprüche 1 bis 7.


**Revendications**

**1.** Transpondeur radiofréquence (1) comportant :

un substrat (2);
un circuit intégré (3) disposé sur ledit substrat (2); et

une antenne (4) disposée sur ledit substrat (2) et raccordée au circuit intégré (3), l'antenne (4) comportant:

un premier bras conducteur (4.1) ayant une structure sensiblement en forme de U et un deuxième bras conducteur (4.2) ayant une structure au moins partiellement en forme de méandre,

dans lequel le premier bras conducteur (4.1) comporte un premier, un deuxième et un troisième segment conducteur (4.11, 4.12, 4.13) et dans lequel les premier et troisième segments conducteurs (4.11, 4.13) du premier bras conducteur (4.1) sont orientés dans des directions parallèles et le deuxième segment conducteur (4.12) du premier bras conducteur (4.1) est orienté dans une direction verticale par rapport à une ligne centrale (CL) du substrat (2),

dans lequel le deuxième bras conducteur (4.2) comporte un premier, un deuxième, un troisième, un quatrième et un cinquième segment conducteur (4.21, 4.22, 4.23, 4.24, 4.25), dans lequel les premier, troisième et cinquième segments conducteurs (4.21, 4.23, 4.25) du deuxième bras conducteur (4.2) sont orientés dans des directions parallèles et les deuxième et quatrième segments conducteurs (4.22, 4.24) du deuxième bras conducteur (4.2) sont orientés dans une direction verticale par rapport à la ligne centrale (CL) du substrat (2),

**caractérisé en ce que** lesdits premier et deuxième bras conducteurs (4.1, 4.2) comportent des deuxièmes extrémités (4.1 ", 4.2") pointant dans la même direction.

2. Transpondeur radiofréquence (1) selon la revendication 1, dans lequel ladite antenne (4) comporte une structure d'antenne asymétrique.

3. Transpondeur radiofréquence (1) selon la revendication 1 ou 2, dans lequel ladite antenne (4) est polarisée linéairement.

4. Transpondeur radiofréquence (1) selon l'une des revendications 1 à 3, dans lequel ledit circuit intégré (3) fournit des informations à un lecteur RFID séparé par l'intermédiaire d'une liaison de communication sans fil.

5. Transpondeur radiofréquence (1) selon l'une des revendications 1 à 4, dans lequel lesdits premier et deuxième bras conducteurs (4.1, 4.2) comprennent des premières extrémités (4.1', 4.2') raccordées au circuit intégré (3).

6. Transpondeur radiofréquence (1) selon l'une des revendications 1 à 5, dans lequel le premier bras conducteur (4.1) comporte une première longueur électrique totale (L1) et le deuxième bras conducteur (4.2) comporte une deuxième longueur électrique totale (L2), dans lequel les première et deuxième longueurs électriques totales (L1, L2) ont des longueurs différentes.

7. Transpondeur radiofréquence (1) selon l'une des revendications 1 à 6, dans lequel ladite fréquence de fonctionnement dudit transpondeur radiofréquence (1) est supérieure à environ 800 MHz.

8. Système d'identification radiofréquence (RFID), comprenant un dispositif lecteur d'identification radiofréquence ayant une antenne d'émission et pouvant fonctionner pour émettre un signal radiofréquence à un transpondeur radiofréquence (1), et un transpondeur radiofréquence (1) selon l'une des revendications 1 à 7.

Fig. 1

## Fig. 2a

## Fig. 2b

Fig. 2c

EP 2 212 832 B1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005119587 A1
- WO 2007047277 A2
- US 2005195124 A1

**Non-patent literature cited in the description**

- Using Text as a Meander Line for RFID Transponder Antennas. *IEEE ANTENNAS AND WIRELESS PROPAGATION LETTERS*, 2004, vol. 3, ISSN 1536-1225, 372-374